# EUROPEAN PATENT SPECIFICATION

(11) **EP 2 233 006 B1**
(45) Date of publication and mention of the grant of the patent: **28.02.2018**
(21) Application number: 09700718.1
(22) Date of filing: 09.01.2009
(51) Int. Cl.: A21D 2/26, A23L 29/238, A23L 29/269, A23L 29/281, A23L 29/30, A21D 13/80, A21D 2/18

(54) **SPONGE CAKE**
BISKUIT
GÂTEAU ÉPONGE

(30) Priority: 11.01.2008 JP 2008003884
(43) Date of publication of application: 29.09.2010
(73) Proprietor: Meiji Co., Ltd., Chuo-Ku Tokyo (JP)
(72) Inventor: ISHII, Atsushi, Tokyo 104-8002 (JP); ISHIDA, Kunio, Tokyo 104-8002 (JP)
(74) Representative: Regimbeau
(86) International application number: PCT/JP2009/050246
(87) International publication number: WO 2009/088083

(56) References cited:
- EP-A1- 1 629 730
- WO-A1-2005/107499
- FR-A1- 2 788 409
- JP-A- 61 096 942
- JP-A- 2001 321 063
- JP-A- 2006 345 803
- US-A- 4 130 555
- US-A- 5 169 671
- US-A- 5 659 028
- US-A1- 2007 116 824
- YOKO TACHIBANA ET AL.: 'Kakushu Kanmiryo ga Sponge Cake ni Ataeru Eikyo' BULLETIN OF THE WAYO WOMEN'S UNIVERSITY vol. 37, 1997, pages 71 - 85, XP055109763
- P J SNEED ET AL.: 'Cattlehide collagen in quickbreads.' JALCA. vol. 78, 1983, pages 19 - 25, XP008137693
- MANUEL GOMEZ ET AL.: 'Functionality of different hydrocolloids on the quality and shelf-life of yellow layer cakes.' FOOD HYDROCOLLOIDS vol. 21, 2007, pages 167 - 173, XP005842473

## Description

### Technical Field

The present invention relates to a sponge cake using a fructooligosaccharide.

### Background Art

A sponge cake is a cake based on eggs, saccharides such as sugar, and flour, which is prepared by making dough by utilizing the foaming properties of eggs, and baking the dough. The sponge cake is characterized in that the baked dough has a cross section with a structure wherein an infinite number of bubbles are present like sponges. The sponge cake either becomes concave or bulges in the center depending on the condition of the bubbles upon baking. The phenomenon of a sponge cake becoming concave in the center is referred to as "the shrinkage after baking" ("Kamaochi"); such a sponge cake is regarded as an undesirable product, and thus, defective. Moreover, a sponge cake for use as a cake base for a decorated cake or the like preferably has a thickness as uniform as possible, because it is undesirable for such a cake having an excessively large bulge in the center.

Oligosaccharides in which one or more fructose residues are bound to sucrose by β2→1 bonds are collectively referred to as fructooligosaccharides. Examples of fructooligosaccharides include 1-kestose in which one fructose residue is bound to a sucrose unit, nistose in which two fructose residues are bound to a sucrose unit, and fructosylnystose in which three fructose residues are bound to a sucrose unit. Among currently marketed fructooligosaccharides are mixtures of 1-kestose, nistose, and fructosylnystose; and crystalline 1-kestose obtained by crystallization of 1-kestose with a high purity. It has been revealed that fructooligosaccharides have various physiological functions, such as decay resistance, the effect of promoting bifidobacterium growth, the effect of improving the metabolism of lipids such as cholesterol, the effect of regulating immunity, and the effect of inhibiting a rise in blood sugar level. These physiological functions make fructooligosaccharides industrially very useful as functional food ingredients.

Foods such as sponge cakes containing various oligosaccharides have been so far reported.

For example, Japanese Patent Laid-Open Publication No. 49383/1993 discloses a sponge cake in which 30% or more of the saccharide has been substituted with a branched-chain oligosaccharide. However, the publication discloses neither a sponge cake using a fructooligosaccharide nor a water-soluble polymer as used in the present invention.

Japanese Patent Laid-Open Publication No. 346644/1999 discloses a sponge cake containing maltooligosaccharide. The publication relates to freezing resistance, and therefore discloses neither a sponge cake using a fructooligosaccharide nor a water-soluble polymer as used in the present invention.

Furthermore, Japanese Patent Laid-Open Publication No. 96942/1986 discloses bread containing a fructooligosaccharide. Although both sponge cakes and bread use flour and have structures containing an infinite number of bubbles, the publication aims to improve the percentage of residual fructooligosaccharide by using a baker's yeast that hardly digests fructooligosaccharides and does not suggest a sponge cake. The patent publication neither discloses a water-soluble polymer used in the present invention.

The state of the art can also be illustrated by the following references :
D1 (US 5 169 671 A) discloses a food containing a fructose polymer (polyfructan), and also discloses that xanthan gum and guar gum can be substituted with polyfructan.
However, the polyfructan has a molecular weight of 2,000 to 20,000,000 and thus does not correspond to fructooligosaccharide.

D2 (EP 1 629 703 A1) discloses a sugar replacement composition comprising a bulking fibre composition and a sweeter composition, whereby said bulking fibre composition comprises 30 to 75 weight% of polysaccharide (e.g., xanthan and guar gum) and 5 to 45 weight% of oligosaccharide (e.g., oligofructose).
With respect to the proportion of oligofructose in the sugar replacement EP 1 629 703 A1 merely discloses 30 weight% or less.

D3 (FR 2 788 409 A1) discloses a cake containing oligofructose syrup and texturizing agent (e.g., guar gum), but makes no mention of the proportion of oligofructose in saccharide contained in the cake.

D4 (WO 2005/107499 A1) discloses a foodstuff composition containing from 50 to 90% by weight of inulin or fructooligosaccharides, from 10 to 40 % by weight of gelling fibres (e.g. guar gum), and from 1 to 10 % by weight of water-insoluble fibres, with respect to the total weight of the composition.

### Summary of the Invention

The present inventors have found that when a sponge cake is made using a fructooligosaccharide in a proportion of 25 % by weight or more in total saccharide ingredients, the sponge cake becomes concave-shaped in the center (i.e., shrinks after baking) (Study 1). On the other hand, the inventors have found that sponge cakes do not become concave-shaped in the center when various saccharides other than fructooligosaccharides are used (Study 2).

The inventors have also found that when a sponge cake is made using a fructooligosaccharide, the addition of a water-soluble polymer selected from collagen peptide, xanthan gum, and guar gum can prevent the sponge cake from becoming concave in the center (Studies 3 and 4).

Accordingly, the present invention recognizes the heretofore-unknown problem that a sponge cake made using a fructooligosaccharide becomes concave in the center, and also solves this problem.

An object of the present invention is to provide a sponge cake that has excellent physiological functions of a fructooligosaccharide and is prevented from becoming concave in the center.

According to the present invention, there is provided a sponge cake comprising a saccharide consisting of a fructooligosaccharide and a sugar alcohol wherein the fructooligosaccharide is 1-kestose, and a water-soluble polymer which is collagen peptide, wherein the proportion of the fructooligosaccharide in the saccharide is 35 to 100% by weight.

According to the present invention, there is provided a method for making the sponge cake, which comprises the preparation of sponge cake dough which includes mixing a saccharide consisting of 1-kestose and a sugar alcohol in a proportion of 35 to 100 % of 1-kestose by weight of the saccharide with a water-soluble polymer consisting of collagen peptide, and baking the dough.

The fructooligosaccharide used in the present invention has physiological functions such as decay resistance, the effect of promoting Bifidobacterium growth, the effect of improving the metabolism of lipids such as cholesterol, the effect of regulating immunity, and the effect of inhibiting a rise in blood sugar lever. Therefore, the sponge cake according to the present invention advantageously has the excellent physiological functions of the fructooligosaccharide, and can provide a product of high value that is prevented from becoming concave in the center.

### Brief description of the Drawings

Figure 1 is a cross section of the sponge cake of Example 1.
Figure 2 is a cross section of the sponge cake of Example 4.
Figure 3 is a cross section of the sponge cake of Comparative Example 1.

### Detailed Description of the Invention

[Sponge Cake] The term "sponge cake" as used herein means a cake made of flour, eggs, and saccharides as ingredients, which is prepared by making dough by utilizing the foaming propertiers of eggs, and baking the dough.

A sponge cake can be made by suitably employing a conventionally used method. For example, a sponge cake can be made by preparing sponge cake dough by mixing the above-mentioned ingredient, and baking the dough. After the preparation of the sponge cake dough, the dough may be poured into a mold and baked to make a sponge cake of a desired shape,

Examples of the methods for making a sponge cake include a method of beating whole eggs together (a "Tomodate" method) and a method of beating and mixing egg yolks and egg whites separately (a "Betsudate" method).

A starch ingredient other than flour can be added to the sponge cake dough according to the present invention. Examples of the starch ingredient other than flour include rice powder, corn powder, cornstarch, tapioca starch, potato starch, and processed starches.

In the sponge cake according to the present invention, the amount of eggs in the total ingredients can be 50 to 400 parts by weight, preferably 80 to 200 parts by weight, and more preferably 100 to 150 parts by weight, based on 100 parts by weight of the starch ingredients (including flour). The eggs used can be whole eggs or egg whites only, but are preferably whole eggs.

In the sponge cake according to the present invention, the amount of the saccharide in the total ingredients can be 50 to 300 parts by weight, preferably 80 to 200 parts by weight, and more preferably 100 to 150 parts by weight, based on 100 parts by weight of the starch ingredients (including flour),

In the sponge cake according to the present invention, the proportions of the starch ingredients (including flour), eggs, and saccharide in the total ingredients, based on a total weight of 100 of the starch ingredients (including flour), eggs, and saccharide, can be 10 to 50, 25 to 60, and 15 to 50, respectively; preferably 15 to 45, 30 to 55, and 20 to 45, respectively; and more preferably 20 to 35, 30 to 50, and 30 to 40, respectively.

In addition to the flour, eggs, and saccharide, the sponge cake according to the present invention uses, as an ingredient, a water-soluble polymer selected from the group consisting of collagen peptide, xanthan gum, and guar gum.

The sponge cake according to the present invention can optionally contain other ingredients commonly used in the production of sponge cakes singly or in appropriate combinations, in amounts such that a sponge cake can be made. Examples of the other ingredients that can be added include dairy products such as whole milk powder, dried skim milk, milk, condensed milk, yogurt, cheese, and whey; fats and oils such as butter, margarine, and shortening; fruit juices such as orange juice and lemon juice; nuts such as almonds and macadamia nuts; cocoa; chocolate; dried fruits; jams; fillings; sweeteners such as aspartame, sucralose, acesulfame potassium, and stevia; leavening agents such as baking soda, ammonium carbonate, and baking powder; emulsifiers such as sugar esters, monoglycerol esters, and sorbitan esters; acidulants such as citric acid and malic acid; flavors; colorants; dietary fibers; salt; vitamins; and minerals.

The expression "the sponge cake is concave-shaped in the center" as used herein means that the sponge cake upon baking is not uniform in thickness, and is concave in the center. Whether or not the sponge cake is concave in the center can be determined by measuring a difference between the thickness of an edge portion and the thickness of a central portion of the sponge cake. Specifically, a sponge cake can be determined to be concave in the center when the difference between the thickness of the thickest portion of the edge portion (the maximum thickness) and the thickness of the thinnest portion of the central portion (the minimum thickness) of the sponge cake exceeds 10% of the thickness of the thickest portion of the edge portion.

The sponge cake according to the present invention may have a shape that bulges in the center (thickness), as long as it is prevented from becoming concave in the center. However, when the sponge cake is used as a cake base, it preferably has a shape with a substantially uniform thickness upon baking, i.e., the difference between the thickness of the thickest portion and the thinnest portion of the sponge cake is 10% or less of the thickness of the thickest portion of the sponge cake.

### [Fructooligosaccharide]

In the production of the sponge cake according to the present invention, the fructooligosaccharide is 1-kestose, preferably crystalline 1-kestose. Because of its little hygroscopicity, crystalline 1-kestose is very easy to handle.

The fructooligosaccharides or a single component thereof used in the present invention may be a commercially available product.

The fructooligosaccharides or a single component thereof used in the present invention can be prepared according to a known method. For example, crystalline 1-kestose can be prepared according to the method described in WO97/021718.

In the sponge cake according to the present invention, when the proportion of the saccharide in the total ingredients, based on a total weight of 100 of the starch ingredients (including flour), eggs, and saccharide, is 25 or more, preferably 30 or more, and more preferably 33 or more, the amount of the fructooligosaccharide in the total saccharide ingredients is 35 to 100% by weight. To provide the physiologically active functions of the fructooligosaccharide, the amount of the fructooligosaccharide in the total saccharide ingredients is preferably 35 to 100% by weight, more preferably 45 to 100% by weight, and even more preferably 50 to 100% by weight.

Examples of the saccharides other than fructooligosaccharides include monosaccharides such as fructose and glucose; disaccharides such as sucrose, lactose, maltose, and trehalose; oligosaccharides such as galactooligosaccharides, xylooligosaccharides, and lactulose; and sugar alcohols such as maltitol, lactitol, erythritol, reduced palatinose, xylitol, sorbitol, and palatinit.

When a fructooligosaccharide and a sugar alcohol only is used as the saccharide or saccharides contained in the sponge cake, an abrupt rise in the blood sugar level after the ingestion of the sponge cake can be inhibited. A preferred sugar alcohol is maltitol in view of its shape-retaining ability.

### [Water-Soluble Polymer]

As will be described in the Examples, it has been found that a sponge cake made using a fructooligosaccharide as a saccharide ingredient becomes concave-shaped in the center; however, the addition of a water-soluble polymer selected from the group consisting of collagen peptide, xanthan gum, and guar gum as an ingredient when making a sponge cake can effectively prevent this phenomenon.

The term "collagen peptide" as used herein means a peptide having an average molecular weight of about 10,000 or less, which is prepared by hydrolysis of collagen into lower molecules.

The collagen peptide used in the present invention may be a commercially available product.

The collagen peptide used in the present invention can be prepared according to a known method (for example, the method described in Japanese Patent Laid-Open Publication No. 241013/2006). Collagen peptide can be prepared by, for example, hydrolysis of the collagen contained in fish, cows, pigs, chickens, or the like into lower molecules, or by hydrolysis of gelatin obtained by heat denaturation of collagen into lower molecules.

As compared to gelatins and polysaccharide thickeners that can be difficult to dissolve without using hot water, or difficult to dissolve in high concentrations, collagen peptide is very easy to handle because it easily dissolves in cold water, and can be dissolved in high concentrations. Furthermore, since collagen peptide is not a food additive, a sponge cake not using a food additive can be made by adding collagen peptide without using other thickeners, emulsifiers, leavening agents, and the like.

In the sponge cake according to the present invention, the amount of collagen peptide in the total ingredients can be 0.3 to 15 parts by weight, preferably 0,5 to 10 parts by weight, more preferably 0.5 to 1 part by weight, and particularly preferably 0.5 to 0.8 part by weight, based on 100 parts by weight of the starch ingredients (including flour).

Collagen peptide can be added to the ingredients in its original powder form, or as a solution obtained by dissolving the collagen peptide in water, but is preferably added as a solution to provide a uniform mixture.

The term "xanthan gum" as used herein means a polysaccharide having an average molecular weight of millions to tens of millions, which contains repeating units consisting of two glucose molecules, two mannose molecules, and glucuronic acid. The term "xanthan gum" includes alkali metal salts (for example, sodium salt and potassium salt) of xanthan gum, and alkaline earth metal salts (for example, calcium salt) of xanthan gum.

The xanthan gum used in the present invention may be a commercially available product.

The term "guar gum" as used herein means a polysaccharide having an average molecular weight of 200,000 to 300,000, which has a linear bond of two mannose molecules and a side chain of one galactose molecule.

The guar gum used in the present invention may be a commercially available product.

In the sponge cake according to the present invention, the amount of xanthan gum or guar gum in the total ingredients can be 0.01 to 0.5 part by weight, preferably 0.03 to 0.5 part by weight, and more preferably 0.06 to 0.2 part by weight, based on 100 parts by weight of the starch ingredients (including flour). These ranges enhance the effect of preventing the sponge cake from becoming concave in the center, and make the texture of the sponge cake desirable.

The term "average molecular weight" as used herein means a molecular weight (a number average molecular weight) calculated as an average molecular weight of a polymer (collagen peptide, xanthan gum, or guar gum) based on the number of molecules of the polymer.

The average molecular weight can be measured, for example, according to the following method.

First, gel filtration analysis is conducted by the HPLC method, and a calibration curve is prepared using Multistation GPC-8020 Software Ver. 4.0 (manufactured by TOSOH CORPORATION), based on the retention time of the molecular weight marker. Next, using this calibration curve, the average molecular weight can be calculated based on the average retention time of the target polymer.

In the case of, for example, collagen peptide, the analysis conditions may be as follows.

### Analysis conditions:

Column: TSK-GEL3000PW_{XL} (300 × 7.8 mm)
Eluent: 45% acetonitrile (containing 0.1% TFA)
Flow rate: 0.5 ml/min
Detection condition: 215 nm

In the present invention, the "water-soluble polymer selected from the group consisting of collagen peptide, xanthan gum, and guar gum" may be a combination of two or more water-soluble polymers selected from the group consisting of collagen peptide, xanthan gum, and guar gum.

In the present invention, the "water-soluble polymer selected from the group consisting of collagen peptide, xanthan gum, and guar gum" is preferably collagen peptide.

According to the present invention, there is provided a method for making a sponge cake according to claim 4.

According to the present invention, there is provided a sponge cake according to claim 1, wherein the collagen peptide is added in an amount of 0.1 to 10 parts by weight, and preferably 0.5 to 10 parts by weight, based on 100 parts by weight of water-based ingredients (for example, eggs, milk, fruit juice, water, yogurt, and whey).

### Examples

### Study 1 (comparative example)

After 150 g of a saccharide and 150 g of whole eggs were mixed with stirring, 150 g of flour was added. The mixture was further stirred to prepare sponge cake dough. The saccharides were prepared using sugar and 1-kestose (a crystalline powder containing 97% or more of 1-kestose; trade name: Meioligo CR, manufactured by Meiji Seika Kaisha, Ltd.) according to the formulations listed in Table 1.

Into a 18 cm round mold on which glassine was placed, 400 g of the sponge cake dough was poured, and the dough was baked at 180°C for 40 minutes to prepare a sponge cake. The sponge cake was removed from the mold and cut along the center. The thicknesses of the edge and the center of the sponge cake were measured.

The results are shown in Table 1.

**[Table 1]**

| | Only Sugar | Substituted with 25% 1-Kestose | Substituted with 50% 1-Kestose | Substituted with 75% 1-Kestose |
|---|---|---|---|---|
| Flour (g) | 150 | 150 | 150 | 150 |
| Whole Eggs (g) | 150 | 150 | 150 | 150 |
| Sugar (g) | 150 | 112.5 | 75 | 37.5 |
| 1-Kestose (g) | - | 37.5 | 75 | 112.5 |
| Thickness (Center) | 5.2cm | 4.4cm | 3.7cm | 2.4cm |
| Thickness (Edge) | 5.1cm | 4.9cm | 4.7cm | 4.5cm |

The sponge cake containing sugar only as the saccharide was uniform in thickness. In contrast, the sponge cakes containing 25% by weight or more of 1-kestose were concave-shaped in the center.

The foregoing results have confirmed that sponge cakes containing 25% by weight or more of 1-kestose as a saccharide become concave in the center. The present inventors confirmed that similar results were also obtained when a fructooligosaccharide mixture was used instead of 1-kestose (the data omitted).

### Study 2 (comparative example)

After 150 g of a saccharide and 150 g of whole eggs were mixed with stirring, 150 g of flour was added. The mixture was further stirred to prepare sponge cake dough. The various saccharides listed in Table 2 were used as the saccharides.

Into a 18 cm round mold on which glassine was placed, 400 g of the sponge cake dough was poured, and the dough was baked at 180°C for 40 minutes to prepare a sponge cake. The sponge cake was removed from the mold and cut along the center. The thicknesses of the edge and the center of the sponge cake were measured.

The results are shown in Table 2.

**[Table 2]**

| | Xylooligosaccharide | Lactulose | Maltitol | Erythritol | Reduced Palatinose |
|---|---|---|---|---|---|
| Flour (g) | 150 | 150 | 150 | 150 | 150 |
| Whole Eggs (g) | 150 | 150 | 150 | 150 | 150 |
| Saccharide (g) | 150 | 150 | 150 | 150 | 150 |
| Thickness (Center) | 7.2cm | 6.0cm | 5.1cm | 1.9cm | 4.2cm |
| Thickness (Edge) | 5.6cm | 5.3cm | 5.1cm | 2.6cm | 1.9cm |

The sponge cakes using the various oligosaccharides other than a fructooligosaccharide instead of sugar did not become concave-shaped in the center. Moreover, the sponge cake using maltitol as a sugar alcohol underwent similar expansion to that of the sponge cake using sugar.

The foregoing results have confirmed that the use of a fructooligosaccharide as a saccharide results in a sponge cake that is concave in the center.

### Study 3

After 150 g of a saccharide, 150 g of whole eggs, and a 50% by weight aqueous solution of collagen peptide (manufactured by Nitta Gelatin Inc.) dissolved and hydrated in hot water were mixed with stirring, 150 g of flour was added. The mixture was further stirred to prepare sponge cake dough. The saccharides were prepared using 1-kestose, a fructooligosaccharide mixture (an amorphous powder containing 95% or more of a mixture of 1-kestose, nistose, and fructosylnystose; trade name: Meioligo P, manufactured by Meiji Seika Kaisha, Ltd.), and maltitol (manufactured by Roquette K.K.) according to the formulations listed in Table 3. The collagen peptide was prepared to give each of the amounts shown in Table 3.

Into a 18 cm round mold on which glassine was placed, 400 g of the sponge cake dough was poured, and the dough was baked at 180°C for 40 minutes to prepare a sponge cake. The sponge cake was removed from the mold and cut along the center. The thickness of the thickest portion and the thinnest portion of the sponge cake were measured. The shape of the sponge cake was determined as follows: "convex" represents a shape that bulges in the center in appearence; "concave" represents a shape that is concave in the center; and "flat" represents a shape that is substantially uniform in thickness, i.e., the difference between the thickest portion and the thinnest portion is 10% or less of the thickness of the thickest portion.

The results are shown in Tables 3 and 4.

**[Table 3]**

| | Example 1 | Example 2 | Example 3 | Example 4 | Example 5 | Example 6 |
|---|---|---|---|---|---|---|
| Flour (g) | 150 | 150 | 150 | 150 | 150 | 150 |
| Whole Eggs (g) | 150 | 150 | 150 | 150 | 150 | 150 |
| 1-Kestose (g) | 150 | 150 | - | - | 150 | 50 |
| Fructooligosaccharide Mixture (g) | - | - | 150 | 150 | - | - |
| Maltitol (g) | - | - | - | - | - | 100 |
| 50% Aqueous Collagen Solution (g) | 1.5 | 2 | 3 | 10 | 30 | 3 |
| Shape | Flat | Flat | Convex | Convex | Convex | Convex |
| Minimum Thickness | 3,5cm | 3.9cm | 3.6cm | 2.6cm | 3.0cm | 3.6cm |
| Maximum Thickness | 3.7cm | 4.0cm | 4.2cm | 3.8cm | 3.4cm | 4.3cm |

**[Table 4]**

| | Comparative Example 1 | Comparative Example 2 | Comparative Example 3 | Comparative Example 4 |
|---|---|---|---|---|
| Flour (g) | 150 | 150 | 150 | 150 |
| Whole Eggs (g) | 150 | 150 | 150 | 150 |
| 1-Kestose (g) | 150 | - | 50 | - |
| Fructooligosaccharide Mixture (g) | - | 150 | - | 50 |
| Maltitol (g) | - | - | 100 | 100 |
| 50% Aqueous Collagen Solution (g) | - | - | - | - |
| Shape | Concave | Concave | Concave | Concave |
| Minimum Thickness | 2.7cm | 2.6cm | 3.6cm | 2.7cm |
| Maximum Thickness | 4.2cm | 4.2cm | 4.4cm | 4.2cm |

The amount by weight of the 50% aqueous collagen solution in Tables represents the amount by weight calculated as the aqueous solution.

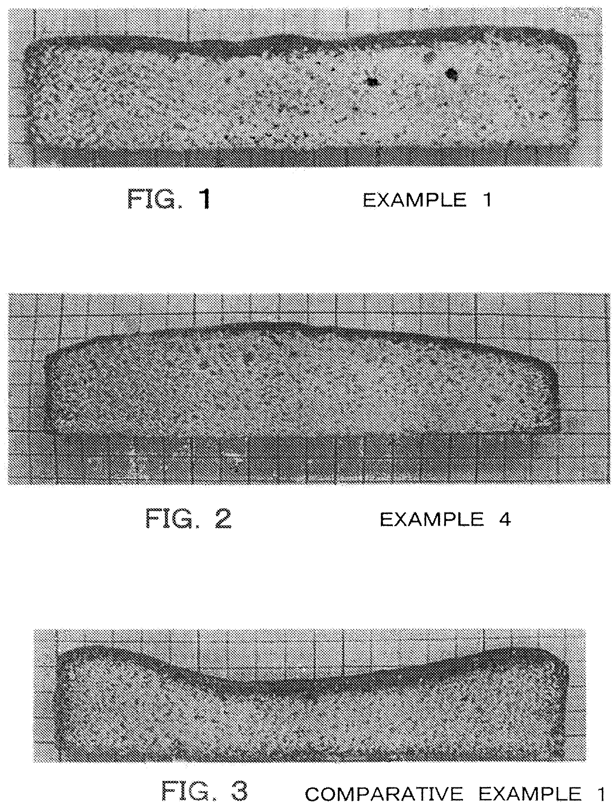

The results have shown that the sponge cakes using 1-kestose or the fructooligosaccharide mixture became concave in the center (Comparative Examples 1 to 4; Figure. 3); however, the addition of collagen peptide prevented the sponge cakes from becoming concave in the center (Examples 1 to 6; Figures 1 and 2). Particularly the sponge cakes according to Examples 1 and 2 were substantially uniform in thickness.

### Study 4 (comparative example)

After 150 g of a saccharide, 150 g of whole eggs, and an aqueous solution of each of various water-soluble polymers (manufactured by San-Ei Gen F.F.I., Inc.) dissolved and hydrated in hot water were mixed with stirring, 150 g of flour was added. The mixture was further stirred to make sponge cake dough. The saccharides were prepared using 1-kestose, a fructooligosaccharide mixture, and maltitol according to the formulations listed in Table 5. The various water-soluble polymers were prepared to give the amounts shown in Table 5.

Into a 18 cm round mold on which glassine was placed, 400 g of the sponge cake dough was poured, and the dough was baked at 180°C for 40 minutes to prepare a sponge cake. The sponge cake was removed from the mold and cut along the center. The thickness of the thickest portion and the thinnest portion of the sponge cake were measured. The shape of the sponge cake was determined according to Study 3.

The results are shown in Table 5.

**[Table 5]**

| | Example 7 | Example 8 | Example 9 | Comparative Example 5 | Comparative Example 6 |
|---|---|---|---|---|---|
| Flour (g) | 150 | 150 | 150 | 150 | 150 |
| Whole Eggs (g) | 150 | 150 | 150 | 150 | 150 |
| 1-Kestose (g) | 150 | 150 | - | 150 | 150 |
| Fructooligosaccharide Mixture (g) | - | - | 50 | - | - |
| Maltitol (g) | - | - | 100 | - | - |
| 1% Xanthan Gum Aqueous Solution (g) | 30 | - | 10 | - | - |
| 1% Guar Gum Aqueous Solution | - | 30 | - | - | - |
| 5% Pullulan Aqueous Solution (g) | - | - | - | 30 | - |
| 5% Gum Arabic Aqueous Solution (g) | - | - | - | - | 30 |
| Shape | Flat | Flat | Flat | Concave | Concave |
| Minimum Thickness | 3.2cm | 3.4cm | 3.7cm | 2.2cm | 2.0cm |
| Maximum Thickness | 3.2cm | 3.7cm | 3.7cm | 4.4cm | 4.1cm |

The amount by weight of each of the various polymer aqueous solutions in Tables represents the amount by weight calculated as the aqueous solution.

The results have shown that the sponge cakes using 1-kestose or the fructooligosaccharide mixture were prevented from becoming concave in the center by the addition of xanthan gum or guar gum (Examples 7 to 9); however, similar effects were not observed with pullulan and gum arabic (Comparative Examples 5 and 6).

## Claims

1. A sponge cake comprising
a saccharide consisting of a fructooligosaccharide and a sugar alcohol wherein the fructooligosaccharide is 1-kestose, and
a water-soluble polymer which is collagen peptide, wherein the proportion of the fructooligosaccharide in the total saccharide ingredients is 35 to 100% by weight.

2. The sponge cake according to claim 1, wherein the proportion of the saccharide in total ingredients, based on a total weight of 100 of starch ingredients (including flour), eggs, and saccharide, is 25 or more.

3. The sponge cake according to claim 1, wherein the proportions of starch ingredients (including flour), eggs, and saccharide in total ingredients, based on a total weight of 100 of the starch ingredients (including flour), eggs, and saccharide, are 10 to 50, 25 to 60, and 25 to 50, respectively.

4. A method for making the sponge cake of any one of claims 1 to 3, which comprises the preparation of sponge cake dough which includes mixing a saccharide consisting of 1-kestose and a sugar alcohol in a proportion of 35 to 100 % of 1-kestose by weight of the total saccharide ingredients with a water-soluble polymer consisting of collagen peptide, and baking the dough.

## Patentansprüche

1. Biskuit, umfassend
ein Saccharid, bestehend aus einem Fructooligosaccharid und einem Zuckeralkohol, wobei das Fructooligosaccharid 1-Kestose ist und
ein wasserlösliches Polymer, welches ein Kollagenpeptid ist, wobei der Anteil des Fructooligosaccharids in den gesamten Saccharidbestandteilen 35 bis 100 Gewichts-% ist.

2. Biskuit nach Anspruch 1, wobei der Anteil des Saccharids in den gesamten Bestandteilen, basierend auf einem Gesamtgewicht von 100 von Stärkebestandteilen (einschließlich Mehl), Eiern und Saccharid, 25 oder mehr ist.

3. Biskuit nach Anspruch 1, wobei die Anteile der Stärkebestandteile (einschließlich Mehl), Eiern und Saccharid in den gesamten Bestandteilen, basierend auf einem Gesamtgewicht von 100 von Stärkebestandteilen (einschließlich Mehl), Eiern und Saccharid, jeweils 10 bis 50, 25 bis 60 und 25 bis 50 sind.

4. Verfahren zur Herstellung des Biskuits nach einem der Ansprüche 1 bis 3, welches die Zubereitung eines Biskuitteigs umfasst, welche das Mischen eines Saccharids, bestehend aus 1-Kestose und einem Zuckeralkohol in einem Anteil von 35 bis 100 Gewichts-% der 1-Kestose pro Gewicht der gesamten Saccharidbestandteile, mit einem wasserlöslichen Polymer, bestehend aus einem Kollagenpeptid, enthält, sowie das Backen des Teigs.

## Revendications

1. Gâteau éponge comprenant
des saccharides constitués d'un fructooligosaccharide et d'un alcool de sucre dans lequel le fructooligosaccharide est le 1-kestose,
un polymère soluble dans l'eau qui est un peptide de collagène, dans lequel la proportion du fructooligosaccharide dans la totalité des ingrédients saccharides va de 35 à 100 % en poids.

2. Gâteau éponge selon la revendication 1, dans lequel la proportion des saccharides dans la totalité des ingrédients, sur la base un poids total de 100 des ingrédients à base d'amidon (englobant la farine), des oeufs, et des saccharides, est supérieure ou égale à 25.

3. Gâteau éponge selon la revendication 1, dans lequel les proportions des ingrédients à base d'amidon (englobant la farine), des oeufs, et des saccharides dans la totalité des ingrédients, sur la base d'un poids total de 100 des ingrédients à base d'amidon (englobant la farine), des oeufs, et des saccharides, vont de 10 à 50, de 25 à 60, et de 25 à 50, respectivement.

4. Méthode pour faire le gâteau éponge selon l'une quelconque des revendications 1 à 3, qui comprend la préparation d'une pâte de gâteau éponge qui inclut le mélange d'un saccharide constitué de 1-kestose et d'un alcool de sucre dans une proportion allant de 35 à 100 % de 1-kestose en poids de la totalité des ingrédients saccharides avec un polymère soluble dans l'eau constitué d'un peptide de collagène, et la cuisson de la pâte.
